# FASCICULE DE BREVET EUROPEEN

(11) **EP 3 765 279 B1**
(45) Date de publication et mention de la délivrance du brevet: **03.05.2023**
(21) Numéro de dépôt: 19713107.1
(22) Date de dépôt: 06.03.2019
(51) Int. Cl.: B29D 30/44, B65H 5/22

(54) **DISPOSITIF DE MAINTIEN PRODUIT PARAMÉTRABLE EN COURS DE PROCESSUS RÉALISÉ SUR LE PRODUIT**
VORRICHTUNG ZUM HALTEN EINES PRODUKTS, DIE WÄHREND DER VERARBEITUNG DES PRODUKTS KONFIGURIERT WERDEN KANN
DEVICE FOR HOLDING A PRODUCT, WHICH CAN BE CONFIGURED AS THE PRODUCT IS BEING PROCESSED

(30) Priorité: 14.03.2018 FR 1852191
(43) Date de publication de la demande: 20.01.2021
(73) Titulaire: COMPAGNIE GENERALE DES ETABLISSEMENTS MICHELIN, 63000 Clermont-Ferrand (FR)
(72) Inventeur: LAMACHERE, Yohan, 63040 CLERMONT-FERRAND Cedex 9 (FR)
(74) Mandataire: Roussy, Delphine
(86) Numéro de dépôt international: PCT/FR2019/050498
(87) Numéro de publication internationale: WO 2019/175494

(56) Documents cités:
- WO-A2-2009/128007
- FR-A1- 2 763 877
- FR-A1- 3 010 928

## Description

### DOMAINE TECHNIQUE

L'invention concerne d'une manière générale la production de pneumatiques de véhicules. Plus particulièrement, l'invention concerne la production de produits plats qui sont utilisés dans la production de pneumatiques et de produits des pneumatiques.

### CONTEXTE

Dans le domaine de la fabrication de pneus, il existe des machines qui produisent des produits semi-finis. Une série est constituée de produits semi-finis en forme de plis, munis de renforts filiformes assemblés pour constituer un pneumatique cru. Les plis sont produits à plat, à grandes dimensions, puis découpés pour s'adapter aux dimensions d'un produit donné. Au moins certains des produits semi-finis sont assemblés, pour commencer, sensiblement à plat. Le pneumatique cru est ensuite formé pour lui donner le profil toroïdal typique des pneumatiques. L'utilisation répandue dans l'industrie de ce type de fabrication rend la terminologie généralement acceptée, en particulier les "plis" (au singulier ou au pluriel) ou la "carcasse" (voir par exemple, le brevet copropriété FR2924978).

Sur les machines de préparation ou d'assemblage, les produits en bande, ont besoin d'être maintenu lors de la coupe ou de leurs déplacements vers une autre opération. L'utilisation du vide pour maintenir le produit est une des technologies utilisées. La difficulté consiste à assurer le maintien du produit correctement en s'adaptant aux dimensions de celui-ci avec la meilleure précision possible et sans dégrader le produit.

Certaines solutions ont été développées par rapport au paramétrage du produit qui passe des machines de préparation ou d'assemblage comme les tables de pose. Par exemple, une solution est divulguée par la publication WO2014155258 qui permet de tenir le produit pendant la coupe par pression mécanique. Le vide n'est utilisé que pour soulever et déplacer le produit vers une autre opération. Il n'y a pas de fonction de paramétrage suivant la dimension en dehors éventuellement d'avoir des préhenseurs par largeur. Une autre solution divulguée par la publication EP0561609 est un système qui génère plusieurs fonctions (tenu du produit par le vide pendant la coupe, enclume pour la coupe, et transfert du produit vers le tambour). La fonction paramétrable suivant la dimension du produit n'apparait pas. Encore une autre solution divulguée par le brevet US7775475 est une barrette de tenu du produit sur tambour qui est paramétrable suivant la largeur du ou des produits. Le paramétrage se fait par un changement du tube intérieur qui laisse passer ou non la dépression par les trous de la barrette suivant les orifices correspondant à la largeur produit et suivant la position sur le tambour. Ce principe permet d'être paramétrable mais pas de manière automatique. Le document FR 3 010 928 A1 divulgue les caractéristiques essentielles du préambule de la revendication indépendante 1.

En dehors du domaine de la production de pneumatiques, d'autres solutions sont utilisées pour la rétention des produits pendant la manipulation de ceux-ci. Par exemple, certaines de ces solutions comportent des plateaux à vide qui sont utilisés pour maintenir une ou plusieurs parties métalliques. Les ventouses sont adaptées aux paramètres de la pièce métallique manipulée, un procédé qui n'est pas automatisé.

Dans certaines solutions, on utilise une pince à mouvement alternatif qui se déplace entre une position surélevée (permettant au produit de passer) et une position abaissée (pour maintenir le produit).

Dans les solutions utilisant des aimants, les aimants sont situés sous une table de support. Leurs influences sur le produit sont régulées par un rapprochement ou une distance par rapport à celui-ci.

Un dispositif de maintien doit permettre le maintien efficace homogène et fiable du produit (par exemple, lors le produit face à l'action d'une lame afin d'obtenir des coupes). L'effort de maintien devra être suffisant pendant la durée du processus réalisée sur le produit. En attendant un processus d'être réalisé, le produit doit rester en position sans déplacement.

### RESUMÉ

L'invention concerne un dispositif de maintien produit paramétrable en cours d'un processus réalisé sur le produit, selon la revendication 1.

Dans certains modes de réalisation, le dispositif inclut en outre au moins un tuyau d'alimentation s'engage sur un conduit correspondant qui établit la communication fluide entre le tuyau d'alimentation et la chambre primaire du dispositif.

Dans certains modes de réalisation, le dispositif, le nombre d'ouvertures d'alimentation correspondent généralement au nombre de pistons de fermeture.

Dans certains modes de réalisation, les orifices d'alimentation sont distribués dans une zone de préhension de l'élément de contact. Dans certains modes de réalisation, les orifices d'alimentation distribués dans la zone de préhension sont distribués en forme de parallélogramme.

Dans certains modes de réalisation, chaque orifice inclut une partie circonférentielle qui circonscrit un élément tronconique, la partie circonférentielle avec une périphérie qui forme, avec l'élément tronconique, une surface de contact entre l'orifice et le produit.

Dans certains modes de réalisation, la chambre primaire du dispositif de maintien est définie entre la surface supérieure du cadre de support et la surface antérieure de l'élément plan, la chambre primaire du dispositif de maintien ayant une largeur et une longueur qui correspondent respectivement à une partie de largeur et une partie de longueur de la zone de préhension. La chambre secondaire du dispositif de maintien est définie dans la table de pose entre l'élément plan et l'élément de contact, la chambre secondaire du dispositif de maintien ayant une largeur et une longueur qui correspondent respectivement à une partie de largeur et une partie de longueur de la zone de préhension. L'ouverture d'alimentation est définie dans l'élément plan pour établir la communication fluide entre la chambre primaire et la chambre secondaire du dispositif de maintien.

Dans certains modes de réalisation, le piston de fermeture est fixé à la surface antérieure du cadre de support, et la tige est axialement alignée par rapport à l'axe de l'ouverture d'alimentation.

Dans certains modes de réalisation, le dispositif inclut un dispositif de transport qui comporte un châssis avec plusieurs dispositifs de préhension qui s'engagent sur le produit pendant des phases de transport du produit, et dans lequel la chambre primaire, la chambre secondaire et l'ouverture d'alimentation sont disposées. Au moins un micro-distributeur est intégré avec le châssis pour réaliser un pilotage du piston de fermeture en contrôlant le mouvement alternatif entre la position engagée et la position désengagée.

Dans certains modes de réalisation, les dispositifs de préhension comprennent des ventouses alignées en dessous du châssis en communication fluide avec la chambre secondaire.

Dans certains modes de réalisation, la chambre secondaire est délinée par un élément de support de châssis et un élément de support de dispositifs de préhension.

Dans certains modes de réalisation, le piston de fermeture est fixé au châssis, et la tige est perpendiculairement alignée par rapport à l'axe de l'ouverture d'alimentation de sorte que la tige traverse l'ouverture d'alimentation en mouvement alternatif entre la position engagée et la position désengagée.

L'invention concerne aussi un système de maintien produit paramétrable en cours d'un processus réalisé sur le produit, le système comprenant le dispositif comme divulgué.

Dans certains modes de réalisation, le système inclut le dispositif de maintien et le dispositif de transport comme divulgué.

D'autres aspects de l'invention vont devenir évidents grâce à la description détaillée suivante.

### BRÈVE DESCRIPTION DES DESSINS

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
La figure 1 représente une vue en coupe perspective d'un dispositif de l'invention comprenant un dispositif de maintien.
La figure 2 représente une vue en coupe partielle du dispositif de la figure 1.
La figure 3 représente une vue en coupe partielle perspective du dispositif des figures 1 et 2.
La figure 4 représente une vue en coupe perspective d'un dispositif de l'invention comprenant un dispositif de transport.
La figure 5 représente une vue en coupe du dispositif de la figure 4.

### DESCRIPTION DÉTAILLÉE

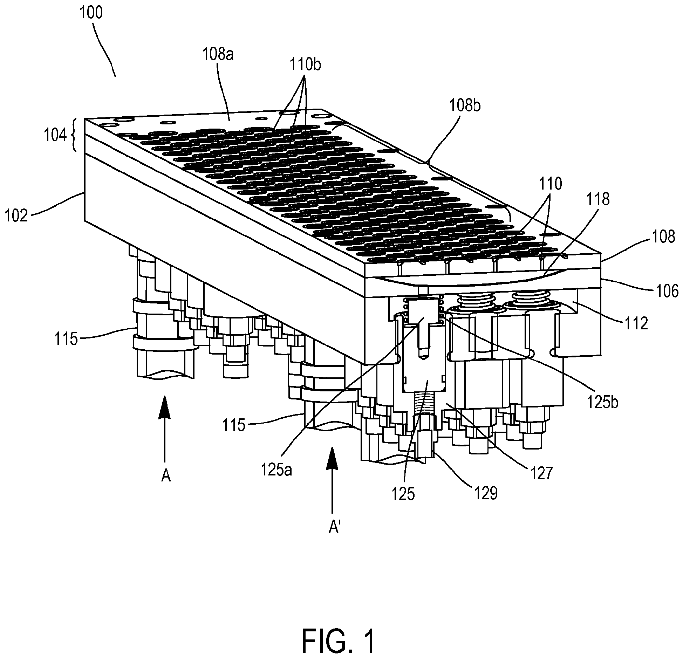

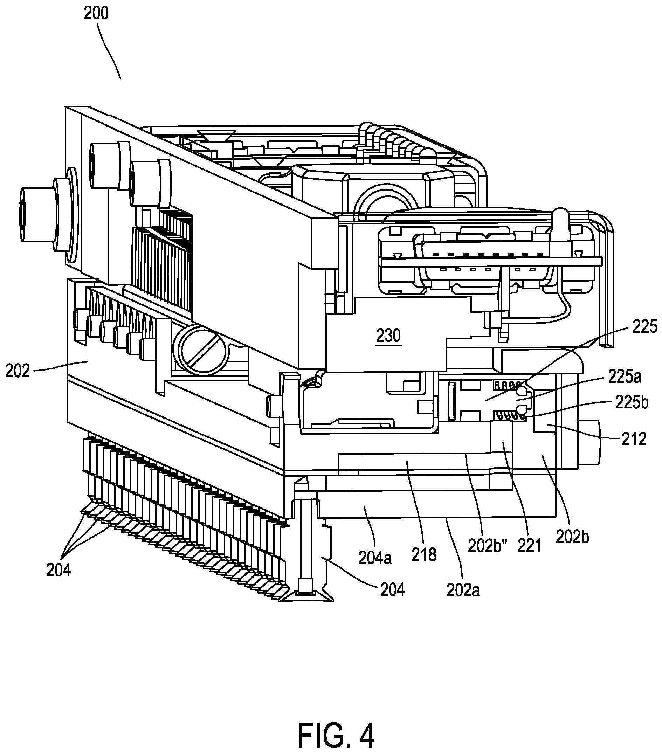

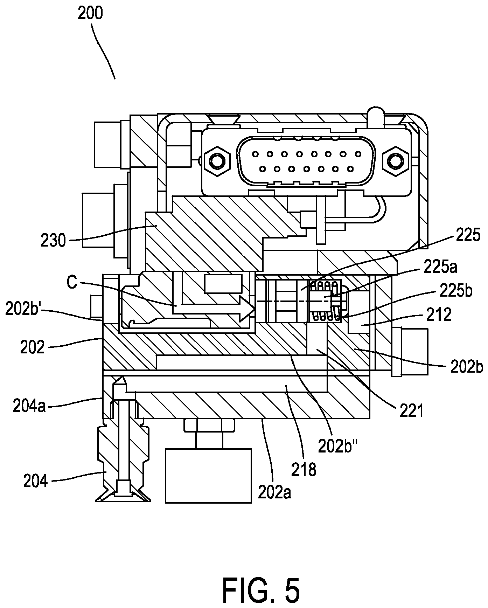

En se référant maintenant aux figures, sur lesquelles les mêmes numéros identifient des éléments identiques, un système de maintien produit paramétrable comporte un dispositif de maintien produit paramétrable. Le dispositif peut comporter un dispositif de maintien 100 (voir les figures 1 à 3), un dispositif de transport 200 (voir les figures 4 et 5) ou les deux. Chacun du dispositif de maintien 100 et du dispositif de transport 100 utilise un circuit de vide dans un anneau plutôt qu'un perçage seul. Cette configuration permet un maintien plus homogène.

Le dispositif de maintien 100 tient un produit (pas représenté) en cours d'un processus réalisé sur le produit (par exemple, un processus de couper le produit, un processus de transférer le produit vers un processus suivant, etc.). Par « produit », l'invention entend les produits en pli référencés au-dessus. Il est entendu que l'invention divulguée est utilisable dans d'autres métiers. Par exemple, l'invention est serviable avec les fabriques textiles et les pellicules en plastique ou papier qui sont susceptibles d'être déplacés pendant des processus réalisés sur ces produits distincts.

En se référant aux figures 1 à 3, le dispositif de maintien 100 comporte un cadre de support 102 et une table de pose 104 dont chacun est d'une géométrie généralement rectangulaire de sorte qu'ils soient alignés. Le cadre de support 102 inclut une structure définie entre une surface supérieure 102a et une surface antérieure 102b opposée du cadre de support. La surface supérieure 102a du cadre de support 102 est disposée à côté d'une surface antérieure 106b d'un élément plan 106 de la table de pose 104. Une surface supérieure 106a de l'élément plan 106 est disposée adjacente à un élément de contact 108 de la table de pose 104. Il est entendu que le cadre de support 102 et la table de pose 104, y compris l'élément plan 106 et l'élément de contact 108, peuvent être composés d'une ou plusieurs éléments.

L'élément de contact 108 comporte une surface perforée 108a avec plusieurs orifices d'alimentation (ou « orifices ») 110. Dans un mode de réalisation, les orifices 110 sont distribués en forme de parallélogramme. Les orifices 110 sont distribués dans une zone de préhension 108b de l'élément de contact 108 de sorte que le produit soit tenu pendant des phases de maintien du produit (par exemple, pendant un processus de coupure du produit ou pendant une durée d'attente avant un processus réalisé en aval du dispositif de maintien 100). L'élément de contact 108 s'engage sur une surface plane du produit en attente du processus d'être réalisé.

Dans un mode de réalisation, chaque orifice 110 inclut une partie circonférentielle 110a qui circonscrit un élément tronconique 1 10b. La partie circonférentielle inclut une périphérie 110a' qui forme, avec l'élément tronconique 1 10b, une surface de contact d'entre l'orifice 110 engagée par le produit. L'élément tronconique 110b dirige donc le fluide (le vide ou l'air) qui arrive à l'orifice vers la périphérie 110a' de la partie circonférentielle 110a. L'arrivée du vide sur la périphérie d'un orifice, et non au centre, a pour effet de rendre plus efficace le maintien de produit en permettant l'utilisation maximale de la surface de contact de l'orifice. Aussi, l'arrivée de l'air sur la périphérie d'un orifice, et non au centre, a pour effet de rendre plus efficace la libération de produit de la zone de préhension 108b.

Une chambre primaire 112 est définie entre la surface supérieure 102a du cadre de support 102 et la surface antérieure 106b de l'élément plan 106. Cette chambre primaire joue le rôle de « réservoir » du dispositif de maintien 100. La chambre primaire 112 a une largeur et une longueur qui correspondent respectivement à une partie de largeur et une partie de longueur de la zone de préhension 108b. Dans une mode de réalisation, la largeur et la longueur de la chambre primaire 112 sont égales à la largeur et à la longueur de la zone de préhension 108b.

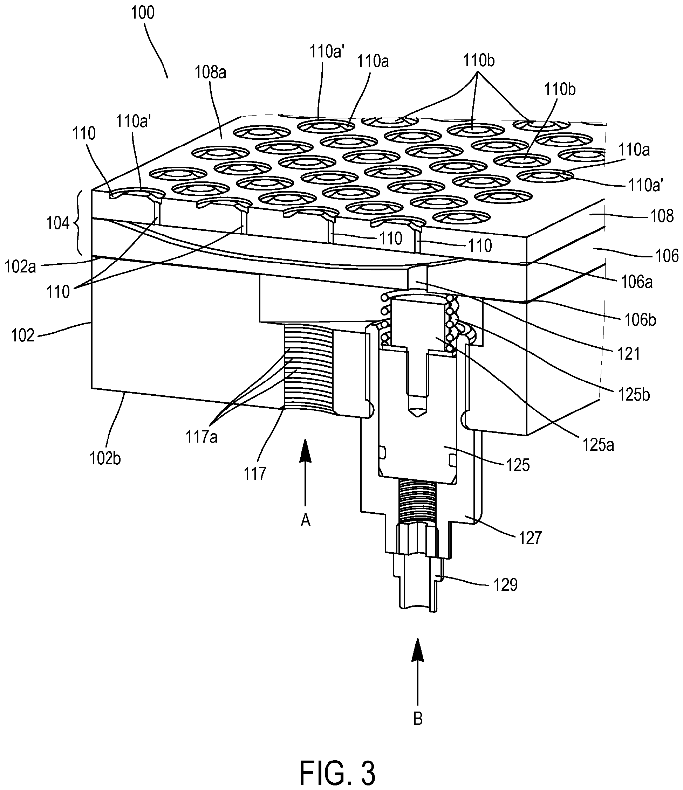

Pendant des phases de maintien et de transport du produit, la chambre primaire 112 du dispositif de maintien 100 est toujours alimentée en vide. Pendant des phases de décollage du produit de la zone de préhension 108b, la chambre primaire 112 du dispositif de maintien est toujours alimentée en air. L'alimentation de la chambre primaire 112 du dispositif de maintien, soit en vide soit en air, est réalisée en utilisant un ou plusieurs tuyaux d'alimentation en vide ou air sous pression comme les tuyaux d'alimentation 115 montrés dans la figure 1. Chaque tuyau d'alimentation 115 s'engage sur un conduit 117 correspondant (par exemple, par plusieurs enfilés 117a ou par moyens équivalents) qui établit la communication fluide entre les tuyaux d'alimentation et la chambre primaire 112 du dispositif de maintien (voir les flèches A et A' des figures 1 et 3). La dépression ou la mise en air est activé par l'ouverture d'un clapet connu (pas représenté), lui-même piloté à l'aide de l'air comprimé. Le clapet permet la mise à disposition rapide de la dépression ou de l'air comprimé contenu dans la chambre primaire 112 du dispositif de maintien 100.

Une chambre secondaire 118 du dispositif de maintien 100 est définie dans la table de pose 104 entre la surface antérieure 106b d l'élément plan 106 et l'élément de contact 108. La chambre secondaire 118 du dispositif de maintien a un rôle de distribution du vide ou de l'air des tuyaux d'alimentation 115 jusqu'aux orifices 110 de la zone de préhension 108b. Les orifices 110 établissent la communication fluide continue entre la chambre secondaire 118 du dispositif de maintien et l'élément de contact 108 (et particulièrement la surface perforée 108a). Au moins une ouverture d'alimentation (ou « ouverture ») 121 est définie dans l'élément plan 106 qui établit la communication fluide entre la chambre primaire 112 et la chambre secondaire 118 du dispositif de maintien. La chambre secondaire 118 du dispositif de maintien a une largeur et une longueur qui correspondent respectivement à une partie de largeur et une partie de longueur de la zone de préhension 108b. Dans un mode de réalisation, la largeur et la longueur de la chambre secondaire 118 sont égales à la largeur et à la longueur de la zone de préhension 108b.

En se référant encore aux figures 1 à 3, le dispositif de maintien 100 comporte en outre un piston de fermeture de table (ou « piston table ») 125 qui permet la communication fluide contrôlée entre la chambre primaire 112 et la chambre secondaire 118 du dispositif de maintien 100 lorsque le piston table est soumis à une pression d'alimentation. Le piston table 125 inclut une tige 125a en mouvement alternatif qui s'engage sur la surface antérieure 106b de l'élément plan 106. Le piston table 125 est fixé au cadre de support 102 par moyen d'un boîtier 127 (ou moyen de fixation équivalent) qui permet l'attachement détachable du piston table 125 à la surface antérieure 102b du cadre de support.

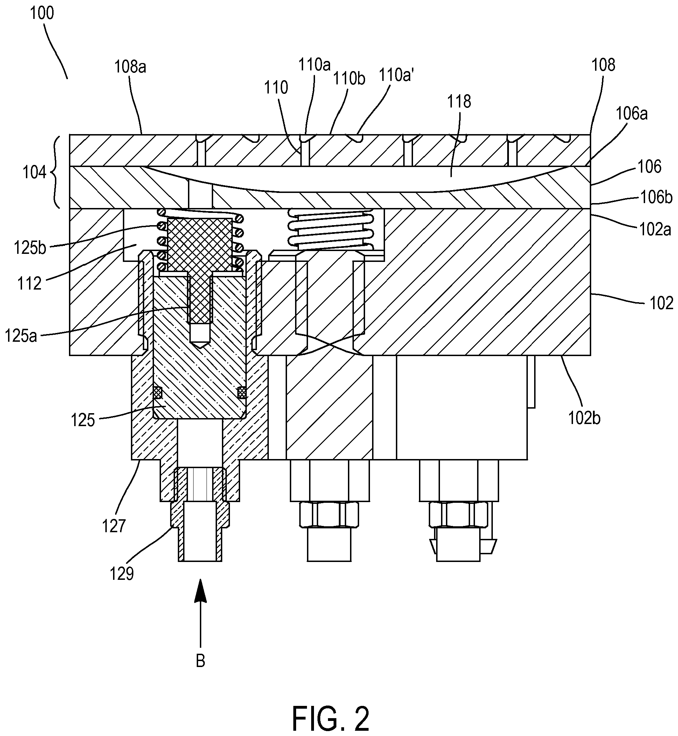

Le piston table 125 inclut un ressort de rappel 125b qui contrôle le positionnement de la tige 125a qui est axialement alignée par rapport à l'axe de l'ouverture 121 correspondante. Le nombre d'ouvertures 121 correspondent généralement au nombre de pistons tables 125 pour que l'élément de contact 108, et particulièrement la surface perforée 108a, soit suffisamment alimentée pendant des phases de maintien et de décollage du produit. Un conduit en air 129 est fourni qui permet l'alimentation en air pour réaliser le pilotage du piston table 125 (voir la flèche B des figures 2 et 3).

Lorsque le piston table 125 est soumis à une pression d'alimentation en air via le conduit en air 129, il réalise une position engagée dans laquelle le piston table obstrue l'ouverture 121. En empêchant l'alimentation de la chambre secondaire 118, les orifices 110, est donc la zone de préhension 108b, ne sont pas alors actifs. Lorsque le piston table 125 n'est pas soumis à une pression d'alimentation en air, le ressort de rappel 125b repousse le piston table 125 pour qu'il réalise une position désengagée dans laquelle le piston table n'obstrue plus l'ouverture 121 (comme montré dans les figures 1 à 3). Il y a alors la communication fluide entre la chambre primaire 112 et la chambre secondaire 118 du dispositif de maintien 100 de sorte que le vide ou l'air fournie par les tuyaux d'alimentation 115 arrive jusqu'aux orifices 110 de la zone de préhension 108b. Le maintien du produit par les orifices 110 dans la zone de préhension 108b, et particulièrement le long de la surface de contact entre chaque orifice et le produit, est donc assurée pendant la durée d'un processus de maintien du produit. Le maintien du produit est tenu aussi pendant des processus complémentaires qui nécessitent la conservation d'un bon positionnement du produit (par exemple, des processus de coupure du produit qui nécessitent un angle de coupe précis).

En se référant en outre aux figures 4 et 5, le dispositif de transport 200 comporte un châssis 202 qui est actionnable pour que des ventouses 204 alignées le long d'une face antérieure 202a du châssis s'engagent sur le produit pendant des phases de transport du produit. Une chambre primaire 212 est définie dans le châssis 202 qui sert comme un réservoir du dispositif de transport 200 (dans une façon similaire à la chambre primaire 112 du dispositif de maintien 100). Pendant des phases de maintien et de transport du produit, la chambre primaire 212 du dispositif de transport est toujours alimentée en vide. Pendant des phases de décollage du produit des ventouses 204, la chambre primaire 212 du dispositif de transport est toujours alimentée en air. L'alimentation de la chambre primaire 212 du dispositif de transport, soit en vide soit en air, est réalisée en utilisant un ou plusieurs tuyaux d'alimentation en vide ou air sous pression correspondant (comme décrit au-dessus par rapport au dispositif de maintien 100). Chaque tuyau d'alimentation peut s'engager sur un conduit correspondant (pas représenté) qui établit la communication fluide entre le tuyau d'alimentation et la chambre primaire 212 du dispositif de transport. La dépression ou la mise en air est activé par l'ouverture d'un clapet connu (pas représenté), lui-même piloté à l'aide de l'air comprimé. Le clapet permet la mise à disposition rapide de la dépression ou de l'air comprimé contenu dans la chambre primaire 212 du dispositif de transport 200.

Une chambre secondaire 218 du dispositif de transport 200 est définie dans le châssis 202 qui distribue le vide ou l'air fournie par les tuyaux d'alimentation correspondants (pas représentés) jusqu'aux ventouses 204 (dans une façon similaire à la chambre secondaire 118 du dispositif de maintien 100). La chambre secondaire 218 est délinée par un élément de support de châssis 202b et un élément de support de ventouses 204a. Au moins une ouverture d'alimentation de ventouse (ou « ouverture ventouse ») 221 est définie entre une surface supérieure 202b' et une surface antérieure 202b" opposée de l'élément de support de châssis 202b. L'ouverture ventouse 221 établit la communication fluide entre la chambre primaire 212 et la chambre secondaire 218 du dispositif de transport.

Le châssis 202 comporte aussi un piston de fermeture de transporteur (ou « piston transporteur ») 225 qui permet la communication fluide contrôlée entre la chambre primaire 212 et la chambre secondaire 218 du dispositif de transport 200 lorsque le piston transporteur est soumis à une pression d'alimentation en air. Le piston transporteur 225 inclut une tige 225a en mouvement alternatif qui s'engage sur l'élément de support de châssis 202b. Le piston transporteur 225 est fixé au châssis 202 par un moyen connu.

Le piston transporteur 225 inclut un ressort de rappel 225b qui contrôle le positionnement de la tige 225a qui est perpendiculairement alignée par rapport à l'axe de l'ouverture ventouse 204 correspondante de sorte que la tige 225a puisse autoriser l'ouverture ventouse, entre une position engagée et une position désengagée (comme décrit en dessous). Le nombre d'ouvertures ventouses 221 correspondent généralement au nombre de pistons transporteurs 225 pour que les ventouses soient suffisamment alimentée pendant des phases de transport et de décollage du produit.

Le dispositif de transport 200 inclut en outre au moins un micro-distributeur 230 qui est intégré avec le châssis 202. Le micro-distributeur 230, par des clapets connus (pas représentés), réalise le pilotage du piston transporteur en contrôlant l'alimentation en air qui effectue un mouvement alternatif de la tige 225a (voir la flèche C de la figure 5). Le micro-distributeur 230 augmente donc la compacité du dispositif de transport 200. Pour garder cet avantage, le nombre de câbles et tuyaux peut être limité sans effet négatif sur le fonctionnement du dispositif de transport 200. L'utilisation d'un circuit imprimé (ou « PCB ») connecté à tous les micro-distributeurs permet l'utilisation d'un câble électrique, d'un tuyau pour le vide et d'un autre pour l'air comprimé.

Lorsque le piston transporteur 225 est soumis à une pression d'alimentation en air par le micro-distributeur 230, il réalise une position engagée dans laquelle le piston transporteur obstrue l'ouverture ventouse 221. En empêchant l'alimentation de la chambre secondaire 218, les ventouses 204 sont alors inactives. Lorsque le piston transporteur 225 n'est pas soumis à une pression d'alimentation en air par le micro-distributeur 230, le ressort de rappel 225b repousse le piston transporteur pour qu'il réalise une position désengagée dans laquelle le piston transporteur n'obstrue plus l'ouverture ventouse 221 (comme montré dans les figures 4 et 5). Il y a alors la communication fluide entre la chambre primaire 212 et la chambre secondaire 218 du dispositif de transport 200 de sorte que le vide ou l'air fournie par le tuyau d'alimentation correspondant arrive jusqu'aux ventouses 204. La préhension du produit par les ventouses 204 est donc assurée pendant la durée d'un processus de maintien et de transport du produit.

L'anneau présente en plus l'intérêt de moins déformer le produit et de faciliter son décollement (soit de la zone de préhension 108b soit des ventouses 204). Une chambre de réserve de vide (c.-à-d., la chambre primaire), se trouvant en permanence en dépression, permet d'optimiser au mieux le temps de mise en maintien du produit. Le dimensionnement de cette chambre peut être choisi en fonction du temps le plus réduit pour réaliser les phases de maintien et de transport.

Pour toutes les réalisations, un système pourrait être mis en place pour assurer la reproductibilité des phases de maintien et de transport du produit en utilisant l'invention divulguée. La vérification peut être faite par un moyen connu, y compris un système de vision qui peut être manuel ou automatisé (par exemple, avec une ou plusieurs caméras en communication avec un PLC). L'exactitude des propriétés du produit au cours de production est donc toujours respectée.

Les termes « au moins un(e) et « un(e) ou plusieurs » sont utilisés de manière interchangeable. Les gammes qui sont présentées comme se situant « entre a et b » englobent les valeurs « a » et « b ».

Bien que des modes de réalisation particuliers de l'invention aient été illustrés et décrits, on comprendra que divers changements, additions et modifications peuvent être pratiqués sans s'écarter de la portée du présent exposé. Par conséquent, aucune limitation ne devrait être imposée sur la portée de l'invention décrite à l'exception de celles exposées dans les revendications annexées.

## Revendications

1. Dispositif de maintien produit paramétrable en cours d'un processus réalisé sur le produit, le dispositif comprenant :
au moins un dispositif de préhension (108a, 204) qui s'engage sur une surface du produit pendant un processus de maintien du produit;
un circuit de vide dans un anneau, comprenant :
une chambre primaire (112, 212) qui est alimentée en vide pendant des phases de maintien et de transport du produit, et qui est alimentée en air pendant des phases de décollage du produit du dispositif de préhension; et
une chambre secondaire (118, 218) qui distribue le vide au dispositif de préhension pendant des phases de maintien et de transport du produit et qui distribue l'air au dispositif de préhension pendant des phases de décollage du produit du dispositif de préhension ;
une ouverture d'alimentation (121, 221) qui établit une communication fluide entre la chambre primaire et la chambre secondaire du dispositif ; et
un piston de fermeture (125, 225) avec une tige (125a, 225a) en mouvement alternatif entre une position engagée, dans laquelle le piston de fermeture obstrue l'ouverture d'alimentation, et une position désengagée, dans laquelle le piston de fermeture n'obstrue pas l'ouverture d'alimentation ; et
un ressort de rappel (125b, 225b) qui réalise le mouvement alternatif de la tige entre la position engagée, réalisée lorsque le piston de fermeture est soumis à une pression d'alimentation en air, et la position désengagée, réalisée lorsque le piston de fermeture n'est pas soumis à une pression d'alimentation en air ; **caractérisé en ce que** le dispositif comprend un dispositif de maintien (100) comportant :
un cadre de support (102) avec une structure définie entre une surface supérieure (102a) et une surface antérieure (102b) opposée ; et
une table de pose (104) comportant :
un élément plan (106) avec une surface antérieure (106b) disposée à côté de la surface supérieure (106a) du cadre de support (102), et avec une surface supérieure (106a) opposée ; et
un élément de contact (108) disposée adjacente à la surface supérieure (106a) de l'élément plan (106), l'élément de contact comportant une surface perforée (108a) avec plusieurs orifices d'alimentation (110) qui établissent la communication fluide continue entre la chambre secondaire (118) du dispositif de maintien et l'élément de contact (108).

2. Dispositif de la revendication 1, comprenant en outre au moins un tuyau d'alimentation (115) s'engage sur un conduit correspondant qui établit la communication fluide entre le tuyau d'alimentation et la chambre primaire du dispositif.

3. Dispositif de la revendication 1 ou de la revendication 2, dans lequel le nombre d'ouvertures d'alimentation correspondent généralement au nombre de pistons de fermeture.

4. Dispositif de la revendication 3, dans lequel les orifices d'alimentation (110) sont distribués dans une zone de préhension (108b) de l'élément de contact.

5. Dispositif de la revendication 4, dans lequel les orifices d'alimentation distribués dans la zone de préhension sont distribués en forme de parallélogramme.

6. Dispositif de l'une quelconque des revendications 3 à 5, dans lequel chaque orifice (110) inclut une partie circonférentielle (110a) qui circonscrit un élément tronconique (110b), la partie circonférentielle avec une périphérie (110a') qui forme, avec l'élément tronconique, une surface de contact entre l'orifice et le produit.

7. Dispositif de l'une quelconque des revendications 3 à 6, dans lequel :
la chambre primaire (112) du dispositif de maintien est définie entre la surface supérieure (102a) du cadre de support (102) et la surface antérieure (106b) de l'élément plan (106), la chambre primaire du dispositif de maintien ayant une largeur et une longueur qui correspondent respectivement à une partie de largeur et une partie de longueur de la zone de préhension (108b);
la chambre secondaire (118) du dispositif de maintien (100) est définie dans la table de pose (104) entre l'élément plan (106) et l'élément de contact (108), la chambre secondaire (118) du dispositif de maintien ayant une largeur et une longueur qui correspondent respectivement à une partie de largeur et une partie de longueur de la zone de préhension (108b) ; et
l'ouverture d'alimentation (121) est définie dans l'élément plan pour établir la communication fluide entre la chambre primaire et la chambre secondaire du dispositif de maintien.

8. Dispositif de l'une quelconque des revendications 3 à 7, dans lequel :
le piston de fermeture (125) est fixé à la surface antérieure (102b) du cadre de support (102) ; et
la tige (125a) est axialement alignée par rapport à l'axe de l'ouverture d'alimentation (121).

9. Dispositif de l'une quelconque des revendications 1 à 3, comprenant un dispositif de transport (200) qui comporte :
un châssis (202) avec plusieurs dispositifs de préhension qui s'engagent sur le produit pendant des phases de transport du produit, et dans lequel la chambre primaire (212), la chambre secondaire (218) et l'ouverture d'alimentation (221) sont disposées; et
au moins un micro-distributeur (230) qui est intégré avec le châssis (202) pour réaliser un pilotage du piston de fermeture en contrôlant le mouvement alternatif entre la position engagée et la position désengagée.

10. Dispositif de la revendication 9, dans lequel les dispositifs de préhension comprennent des ventouses (204) alignées en dessous du châssis en communication fluide avec la chambre secondaire.

11. Dispositif de la revendication 9 ou la revendication 10, dans lequel la chambre secondaire (218) est délinée par un élément de support de châssis (202b) et un élément de support de dispositifs de préhension (204a).

12. Dispositif de l'une quelconque des revendications 9 à 11, dans lequel :
le piston de fermeture (225a) est fixé au châssis (202) ; et
la tige (225a) est perpendiculairement alignée par rapport à l'axe de l'ouverture d'alimentation (221) de sorte que la tige (225a) traverse l'ouverture d'alimentation (221) en mouvement alternatif entre la position engagée et la position désengagée.

13. Système de maintien produit paramétrable en cours d'un processus réalisé sur le produit, le système comprenant le dispositif de l'une quelconque des revendications 1 à 3.

14. Système de la revendication 13, comprenant en outre :
le dispositif de maintien (100) de l'une quelconque des revendications 3 à 8; et
le dispositif de transport (200) de l'une quelconque des revendications 9 à 12.

## Patentansprüche

1. Vorrichtung zum Halten eines Produkts, die während eines an dem Produkt ausgeführten Vorgangs konfiguriert werden kann, wobei die Vorrichtung Folgendes beinhaltet:
mindestens eine Greifvorrichtung (108a, 204), die während eines Haltevorgangs des Produkts mit einer Oberfläche des Produkts in Eingriff kommt;
einen Vakuumkreis in einem Ring, der Folgendes beinhaltet:
eine Primärkammer (112, 212), die während Phasen des Haltens und des Transportierens des Produkts mit einem Vakuum beaufschlagt wird und während Phasen des Lösens des Produkts von der Greifvorrichtung mit Luft beaufschlagt wird; und
eine Sekundärkammer (118, 218), die während Phasen des Haltens und des Transportierens des Produkts das Vakuum an die Greifvorrichtung verteilt und während Phasen des Lösens des Produkts von der Greifvorrichtung die Luft an die Greifvorrichtung verteilt;
eine Beaufschlagungsöffnung (121, 221), die zwischen der Primärkammer und der Sekundärkammer der Vorrichtung eine Fluidkommunikation herstellt;
einen Schließkolben (125, 225) mit einer Stange (125a, 225a), die sich zwischen einer Eingriffsstellung, in der der Schließkolben die Beaufschlagungsöffnung blockiert, und einer Freigabestellung, in der der Schließkolben die Beaufschlagungsöffnung nicht blockiert, hin- und herbewegt; und
eine Rückstellfeder (125b, 225b), die die Hin- und Herbewegung der Stange zwischen der Eingriffsstellung, die erfolgt, wenn der Schließkolben einem Beaufschlagungsdruck mit Luft ausgesetzt ist, und der Freigabestellung, die erfolgt, wenn der Schließkolben keinem Beaufschlagungsdruck mit Luft ausgesetzt ist, ausführt;
**dadurch gekennzeichnet, dass** die Vorrichtung eine Haltevorrichtung (100) beinhaltet, die Folgendes umfasst:
einen Stützrahmen (102) mit einer Struktur, die zwischen einer oberen Oberfläche (102a) und einer entgegengesetzten unteren Oberfläche (102b) definiert ist; und
einen Auflagetisch (104), der Folgendes umfasst:
ein Flächenelement (106) mit einer unteren Oberfläche (106b), die benachbart zu der oberen Oberfläche (106a) des Stützrahmens (102) angeordnet ist, und mit einer entgegengesetzten oberen Oberfläche (106a); und
ein Kontaktelement (108), das angrenzend an die obere Oberfläche (106a) des Flächenelements (106) angeordnet ist, wobei das Kontaktelement eine perforierte Oberfläche (108a) mit mehreren Beaufschlagungslöchern (110) umfasst, die die kontinuierliche Fluidkommunikation zwischen der Sekundärkammer (118) der Haltevorrichtung und dem Kontaktelement (108) herstellen.

2. Vorrichtung nach Anspruch 1, die ferner mindestens ein Beaufschlagungsrohr (115) beinhaltet, mit einer entsprechenden Leitung in Eingriff ist, die die Fluidkommunikation zwischen dem Beaufschlagungsrohr und der Primärkammer der Vorrichtung herstellt.

3. Vorrichtung nach Anspruch 1 oder Anspruch 2, wobei die Anzahl von Beaufschlagungsöffnungen im Allgemeinen der Anzahl von Schließkolben entspricht.

4. Vorrichtung nach Anspruch 3, wobei die Beaufschlagungslöcher (110) in einer Greifzone (108b) des Kontaktelements verteilt sind.

5. Vorrichtung nach Anspruch 4, wobei die Beaufschlagungslöcher, die in der Greifzone verteilt sind, in Form eines Parallelogramms verteilt sind.

6. Vorrichtung nach einem beliebigen der Ansprüche 3 bis 5, wobei jedes Loch (110) einen Umfangsabschnitt (110a) umfasst, der ein kegelstumpfförmiges Element (110b) umgrenzt, wobei der Umfangsabschnitt eine Peripherie (110a') aufweist, die zusammen mit dem kegelstumpfförmigen Element eine Kontaktoberfläche zwischen dem Loch und dem Produkt bildet.

7. Vorrichtung nach einem beliebigen der Ansprüche 3 bis 6, wobei:
die Primärkammer (112) der Haltevorrichtung zwischen der oberen Oberfläche (102a) des Stützrahmens (102) und der unteren Oberfläche (106b) des Flächenelements (106) definiert ist, wobei die Primärkammer der Haltevorrichtung eine Breite und eine Länge aufweist, die jeweils einem Breitenabschnitt und einem Längenabschnitt der Greifzone (108b) entsprechen;
die Sekundärkammer (118) der Haltevorrichtung (100) in dem Auflagetisch (104) zwischen dem Flächenelement (106) und dem Kontaktelement (108) definiert ist, wobei die Sekundärkammer (118) der Haltevorrichtung eine Breite und eine Länge aufweist, die jeweils einem Breitenabschnitt und einem Längenabschnitt der Greifzone (108b) entsprechen; und
die Beaufschlagungsöffnung (121) in dem Flächenelement definiert ist, um die Fluidkommunikation zwischen der Primärkammer und der Sekundärkammer der Haltevorrichtung herzustellen.

8. Vorrichtung nach einem beliebigen der Ansprüche 3 bis 7, wobei:
der Schließkolben (125) an der unteren Oberfläche (102b) des Stützrahmens (102) befestigt ist; und
die Stange (125a) zu der Achse der Beaufschlagungsöffnung (121) axial ausgerichtet ist.

9. Vorrichtung nach einem beliebigen der Ansprüche 1 bis 3, die eine Transportvorrichtung (200) beinhaltet, die Folgendes umfasst:
einen Rahmen (202) mit mehreren Greifvorrichtungen, die während Phasen des Transportierens des Produkts mit dem Produkt in Eingriff kommen, und in dem die Primärkammer (212), die Sekundärkammer (218) und die Beaufschlagungsöffnung (221) angeordnet sind; und
mindestens einen Mikroverteiler (230), der in dem Rahmen (202) integriert ist, um eine Ansteuerung des Schließkolbens durchzuführen, indem er die Hin- und
Herbewegung zwischen der Eingriffsstellung und der Freigabestellung steuert.

10. Vorrichtung nach Anspruch 9, wobei die Greifvorrichtungen Saugnäpfe (204) beinhalten, die unterhalb des Rahmens in Fluidkommunikation mit der Sekundärkammer ausgerichtet sind.

11. Vorrichtung nach Anspruch 9 oder Anspruch 10, wobei die Sekundärkammer (218) durch ein Rahmenstützelement (202b) und ein Stützelement für die Greifvorrichtungen (204a) begrenzt wird.

12. Vorrichtung nach einem beliebigen der Ansprüche 9 bis 11, wobei:
der Schließkolben (225a) an dem Rahmen (202) befestigt ist; und
die Stange (225a) zu der Achse der Beaufschlagungsöffnung (221) senkrecht ausgerichtet ist, sodass die Stange (225a) während der Hin- und Herbewegung zwischen der Eingriffsstellung und der Freigabestellung die Beaufschlagungsöffnung (221) passiert.

13. System zum Halten eines Produkts, das während eines an dem Produkt ausgeführten Vorgangs konfiguriert werden kann, wobei das System die Vorrichtung nach einem beliebigen der Ansprüche 1 bis 3 beinhaltet.

14. System nach Anspruch 13, das ferner Folgendes beinhaltet:
die Haltevorrichtung (100) nach einem beliebigen der Ansprüche 3 bis 8; und
die Transportvorrichtung (200) nach einem beliebigen der Ansprüche 9 bis 12.

## Claims

1. A device for retaining a product in a parameterizable manner during a process carried out on the product, the device comprising:
at least one gripping device (108a, 204) that engages a surface of the product during a product retention process;
a vacuum circuit in a ring, comprising:
a primary chamber (112, 212) that is supplied with a vacuum during product retention and transport phases, and that is supplied with air during product transport phases; and
a secondary chamber (118, 218) that distributes the vacuum to the gripping device during product retention and transport phases and that distributes the air to the gripping device during phases of product extraction from the gripping device;
a supply opening (121, 221) that establishes fluid communication between the primary chamber and the secondary chamber of the device; and
a closing piston (125, 225) with a rod (125a, 225a) reciprocating between an engaged position, in which the closing piston obstructs the supply opening, and a disengaged position, in which the closing piston does not obstruct the supply opening;
a return spring (125b, 225b) that effects the reciprocating movement of the rod between the engaged position, realized when the closing piston is subjected to an air supply pressure, and the disengaged position, realized when the closing piston is not subjected to an air supply pressure;
**characterized in that** the device comprises a retention device (100) comprising:
a support frame (102) with a structure defined between an upper surface (102a) and an opposing front surface (102b); and
a laying table (104) comprising:
a planar member (106) with a front surface (106b) arranged next to the upper surface (106a) of the support frame (102), and with an opposite upper surface (106a); and
a contact member (108) disposed adjacent the upper surface (106a) of the planar member (106), the contact member having a perforated surface (108a) with a plurality of openings (110) that establish continuous fluid communication between the secondary chamber (118) of the retention device and the contact member (108).

2. The device of claim 1, further comprising at least one supply pipe (115) engaging a corresponding conduit that establishes fluid communication between the supply pipe and the primary chamber of the device.

3. The device of claim 1 or claim 2, wherein the number of supply openings generally corresponds to the number of closing pistons.

4. The device of claim 3, wherein the openings (110) are distributed in a gripping area (108b) of the contact element.

5. The device of claim 4, in which the openings distributed in the gripping area are distributed in the form of a parallelogram.

6. The device of any one of claims 3 to 5, wherein each opening (110) includes a circumferential portion (110a) that circumscribes a frustoconical member (110b), the circumferential portion with a periphery (110a') that forms, together with the frustoconical member, a contact surface between the opening and the product.

7. The device of any one of claims 3 to 6, wherein:
the primary chamber (112) of the retention device is defined between the upper surface (102a) of the support frame (102) and the front surface (106b) of the planar member (106), the primary chamber of the retention device having a width and a length that correspond respectively to a width portion and a length portion of the gripping area (108b);
the secondary chamber (118) of the retention device (100) is defined in the laying table (104) between the planar member (106) and the contact member (108), the secondary chamber (118) of the retention device having a width and a length that correspond respectively to a width portion and a length portion of the gripping area (108b); and
the supply opening (121) is defined in the planar member to establish fluid communication between the primary chamber and the secondary chamber of the retention device.

8. The device of any one of claims 3 to 7, wherein:
the closing piston (125) is attached to the front surface (102b) of the support frame (102); and
the rod (125a) is axially aligned with the axis of the feed opening (121).

9. The device of any one of claims 1 to 3, comprising a transport device (200) that comprises:
a frame (202) with a plurality of gripping devices that engage the product during product transport phases, and in which the primary chamber (212), the secondary chamber (218) and the feed opening (221) are arranged; and
at least one micro-valve (230) that is integrated with the frame (202) to perform a closing piston control by controlling the reciprocating movement between the engaged and disengaged positions.

10. The device of claim 9, wherein the gripping devices comprise suction cups (204) aligned below the frame in fluid communication with the secondary chamber.

11. The device of claim 9 or claim 10, wherein the secondary chamber (218) is delineated by a frame support member (202b) and a gripper support member (204a).

12. The device of any one of claims 9 to 11, wherein:
the closing piston (225a) is attached to the frame (202); and
the rod (225a) is perpendicularly aligned with respect to the axis of the supply opening (221) so that the rod (225a) passes through the supply opening (221) in a reciprocating motion between the engaged position and the disengaged position.

13. A system for parameterizable product retention during a process performed on the product, the system comprising the device of any one of claims 1 to 3.

14. The system of claim 13, further comprising:
the retention device (100) of any one of claims 3 to 8; and
the transport device (200) of any one of claims 9 to 12.
